(19) Europäisches Patentamt
European Patent Office
Office européen des brevets

(11) **EP 3 812 117 B1**

(12) **EUROPEAN PATENT SPECIFICATION**

(45) Date of publication and mention
of the grant of the patent:
**13.04.2022 Bulletin 2022/15**

(21) Application number: **19821508.9**

(22) Date of filing: **18.06.2019**

(51) International Patent Classification (IPC):
**B29C 70/30** (2006.01)     **G01N 23/046** (2018.01)
**B29C 70/54** (2006.01)     **G01N 21/892** (2006.01)

(52) Cooperative Patent Classification (CPC):
**B29C 70/34; B29C 70/12;** G01N 23/043;
G01N 23/046; G01N 2021/8472; G01N 2223/406

(86) International application number:
**PCT/JP2019/023985**

(87) International publication number:
**WO 2019/244857 (26.12.2019 Gazette 2019/52)**

(54) **METHOD FOR MANUFACTURING COMPOSITE MATERIAL AND METHOD FOR EXAMINING WEIGHT UNEVENNESS OF COMPOSITE MATERIAL**

VERFAHREN ZUR HERSTELLUNG EINES VERBUNDSTOFFES UND VERFAHREN ZUR UNTERSUCHUNG VON GEWICHTSUNEBENHEITEN EINES VERBUNDSTOFFES

PROCÉDÉ DE FABRICATION DE MATÉRIAU COMPOSITE ET PROCÉDÉ D'EXAMEN DE L'INÉGALITÉ DE POIDS DE MATÉRIAU COMPOSITE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.06.2018 JP 2018116270**

(43) Date of publication of application:
**28.04.2021 Bulletin 2021/17**

(73) Proprietor: **Teijin Limited**
**Osaka 530-0005 (JP)**

(72) Inventor: **TOYOZUMI, Takashi**
**Osaka-shi Osaka 530-0005 (JP)**

(74) Representative: **Epping - Hermann - Fischer**
**Patentanwaltsgesellschaft mbH**
**Schloßschmidstraße 5**
**80639 München (DE)**

(56) References cited:
**WO-A1-2013/061682    WO-A1-2014/023893**
**WO-A1-2016/152563    WO-A1-2019/142503**
**CN-A- 102 735 687    FR-A1- 3 034 339**
**JP-A- H0 480 637    JP-A- H08 505 229**
**JP-A- 2000 238 139    JP-A- 2015 075 428**
**JP-A- 2015 212 646    US-A1- 2006 114 965**

**Description**

TECHNICAL FIELD

The present invention relates to a method for manufacturing a composite material including a step of examining an internal state of the material by using infrared rays or X-rays, the examination method being capable of detecting a basis weight, a void, and presence or absence of foreign matter in the material as two-dimensional spatial distribution.

BACKGROUND ART

In the industrial world, there is an examination method using infrared rays or X-rays as a non-destructive examination method of materials. An example describes a method of examining an object to be examined by heating the object to be examined with a xenon lamp, and receiving infrared rays from the object to be examined (see, for example, Patent Literature 1). Another example describes a method of irradiating a plate-shaped resin or a composite material which is an object to be examined with soft X-rays, and determining a void ratio and a thickness of the plate from a difference in transparency of the soft X-rays (see, for example, Non-Patent Literature 1).
However, since the method uses a xenon lamp as a method of heating a material, a mass production process has problems of life of the lamp, light amount attenuation due to long-term use, and increase of noise, which affect quantification of weight unevenness (see, for example, Non-Patent Literature 1). In addition, in a case of using a general flash lamp, charge time until light emission thereof is also a problem, and is unsuitable for short-time task processing. In addition, although the method described in Patent Literature 1 describes an analysis method, an apparatus described in Non-Patent Literature 1 cannot examine a large-sized product having a size of 300 mm or more in one side. Therefore, it is difficult to examine the large-sized product in line using the apparatus described in Non-Patent Literature 1. Further, references do not describe a method for detecting slight weight unevenness and determination of a significant difference in slight weight unevenness (for example, see Patent Literature 2 and Patent Literature 3).
Patent Literature 4 deals with the measurement of weight unevenness in a carbon fiber reinforced resin using a balance for weighting samples.

CITATION LIST

PATENT LITERATURE

Patent Literature 1: Japanese Patent Publication Japanese Patent No. 5574261
Patent Literature 2: Japanese Patent Publication Japanese Patent No. 6165207
Patent Literature 3: Japanese Examined Utility Model Publication JP-UM-B-58-026328
Patent Literature 4 : WO2016/152563

NON-PATENT LITERATURE

Non-Patent Literature 1: Takahiro Hayashi, Takayuki Kobayashi, Atsushi Takahashi: "Soft X-ray Attenuation Coefficient of Composite Material", The official Journal of Japan Society for Composite Materials, 42, (5) (2016), 169-177

SUMMARY OF INVENTION

TECHNICAL PROBLEM

Therefore, an object of the present invention is to provide a carbon fiber composite material that reduces weight unevenness without foreign matter mixed in the material or voids inside the material through an examination method and an examination process thereof that can examine and quantify slight weight unevenness of a material containing carbon fibers stably for a long time.

SOLUTION TO PROBLEM

In order to solve the above problems, the present invention provides the following methods. That is, main inventions in the present invention are as shown below.

[1] A method for manufacturing a deposit containing thermoplastic resin and carbon fibers, in which a length of one side of the deposit is 300 mm or more, and the method manufactures the deposit through the following steps:

Step 101: an examination step of non-destructively examining a basis weight of either an aggregate of discontinuous carbon fibers or the deposit (hereinafter, referred to as an object to be examined 1),
Step 201: a step of ascertaining weight unevenness of the object to be examined 1 based on examination results of the step 101, and
Step 301: a step of adding the discontinuous carbon fibers to a position of the aggregate of the discontinuous carbon fibers where the basis weight is insufficient so as to reduce the weight unevenness, or a step of adding the aggregate of the discontinuous carbon fibers and/or the thermoplastic resin to a position of the deposit where the basis weight is insufficient so as to reduce the weight unevenness based on the weight unevenness of the step 201

[2] A method for examining weight unevenness of any one of an aggregate of carbon fibers, a deposit containing thermoplastic resin and an aggregate of discontinuous carbon fibers, or a composite material in which the deposit is heated to impregnate the discontinuous carbon fibers with the thermoplastic resin, the any one of the aggregate, the deposit, and the composite material (hereinafter referred to as an object to be examined 2) having a length of one side of 300 mm or more, the method examining the weight unevenness through the following steps:

Step 111: an examination step of examining a basis weight of the object to be examined 2 non-destructively, and
Step 211: a step of ascertaining the weight unevenness of the object to be examined 2 based on examination results of the step 111.

ADVANTAGEOUS EFFECTS OF INVENTION

By working the present invention, not only qualitative examination of presence or absence of foreign matter inside the material and presence or absence of voids inside the material, but also quantitative examination of slight weight unevenness of the material can be performed. At the same time, it is possible to provide a method for manufacturing a carbon fiber composite material in which weight unevenness is prevented or reduced by undergoing the examination process.

DESCRIPTION OF EMBODIMENTS

Here, the present invention discloses a method for manufacturing a deposit containing thermoplastic resin and carbon fibers, in which a length of one side of the deposit is 300 mm or more, and the method manufactures the deposit through the following steps: Step 101: an examination step of non-destructively examining weight unevenness of either an aggregate of discontinuous carbon fibers or the deposit (hereinafter, referred to as an object to be examined 1),

Step 201: a step of ascertaining weight unevenness of the object to be examined 1 based on examination results of the step 101, and
Step 301: a step of adding the discontinuous carbon fibers to a position of the aggregate of the discontinuous carbon fibers where the basis weight is insufficient so as to reduce the weight unevenness, or a step of adding the aggregate of the discontinuous carbon fibers and/or the thermoplastic resin to a position of the deposit where the basis weight is insufficient so as to reduce the weight unevenness based on the weight unevenness of the step 201.

Further, the present invention discloses a method for examining weight unevenness of any one of an aggregate of carbon fibers, a deposit containing thermoplastic resin and an aggregate of discontinuous carbon fibers, or a composite material in which the deposit is heated to impregnate the discontinuous carbon fibers with the thermoplastic resin, the any one of the aggregate, the deposit, and the composite material (hereinafter referred to as an object to be examined 2) having a length of one side of 300 mm or more, the method examining the weight unevenness through the following steps:

Step 111: an examination step of examining weight unevenness of the object to be examined 2 non-destructively, and
Step 211: a step of ascertaining the weight unevenness of the object to be examined 2 based on examination results of the step 111.

Here, the examination method also shows a production method including at least one of a raw material, an in-process intermediate (intermediate product), and a final product. Hereinafter, unless otherwise noted, "the present method" and "the present invention" refer to both the examination method and the manufacturing method including examining by the examination method.

(Non-destructive examination using infrared rays)

The infrared rays used for examination are generally radiated from the object to be examined 1 or the object to be examined 2 (hereinafter, simply referred to as an object to be examined when referring to the two) when the object to be examined generally has a certain heat. The infrared rays may be radiated from the object to be examined heated in a manufacturing process, or the infrared rays may be radiated from the object to be examined as a result of intentionally heating the object to be examined from outside thereof outside the manufacturing process for the present invention. A heating device is not particularly limited, and examples thereof can include a halogen lamp, a flash lamp, a carbon lamp, a quartz lamp, a laser beam, an electromagnetic induction heating, and dielectric heating. The present invention preferably uses a laser beam. Further, examples of the laser beam can include a $CO_2$ laser (carbon dioxide gas laser), a YAG laser, a semiconductor laser, and a fiber laser. Among them, a fiber laser is more preferably used. Reasons for this are from the viewpoints of long life of the heating device, excellent energy conversion efficiency to the laser, stability and easiness to control, little unevenness of supplied heat energy, and ability to heat even an object to be examined having a size of $100 \times 100$ mm or more without unevenness. Output of a laser oscillator is preferably 0.1 kW or more and 10.0 kW or less, more preferably 0.3 kW or more and 8.0 kW or less, and even more preferably 1.0 kW or more and 5.0 kW or less, depending on an irradiation area and width of a laser. It is preferable to irradiate and heat the object to be examined after passing through a device that adjusts or controls an irradiation range (irradiation area, irradiation width, or the like) of the laser, and to detect radiated infrared rays. Here, adjustment of the irradiation range means adjusting a group of light beams to a state in which a point light source at infinity can be considered as a light source of the group of light beams and/or expanding or reducing the irradiation range of the laser beam. More specifically, the laser beam is preferably used to irradiate the object to be examined after the laser beam is adjusted through a collimator.

As an examination device that detects the radiated infrared rays, an infrared sensor is preferable. As the infrared sensor, it is preferable to select one which is possible to capture a necessary temperature amplitude, and which has pixels with a spatial resolution. The temperature amplitude preferably has a resolution of 0.1 degC (°C) or lower, more preferably 0.08 degC (°C) or lower, and most preferably 0.05 degC (°C) or lower. The spatial resolution preferably has a resolution of 5 mm or less per pixel.

An index used for analysis practically may not be an actual temperature, and the practical analysis may use a luminance temperature or a normalized numerical value (0 to 100%, 0 to 256, or the like). Further, it is preferable to use a phase analysis method by detecting the radiated infrared rays since a difference in heat conduction of the object to be examined appears as a time history of the temperature amplitude.

The phase analysis analyzes a phase difference due to a difference in a transmission of heat of energy (infrared rays), in which heat is applied to the object to be examined from a heating device such as a laser beam, the heat is transmitted to the inside of the object to be examined, and the infrared rays are irradiated from a surface of the object to be examined. The transmission of heat depends on a thermal conductivity of the object to be examined, or differences in thermal diffusivity, specific heat, and density of the object to be examined which are shown when the thermal conductivity is represented by a mathematical formula.

That is, depending on an internal state of the object to be examined, a difference occurs in time variation of a surface temperature of the object to be examined and radiant energy of the infrared rays from the surface. Large weight unevenness that can be detected in the object to be examined is presence of voids and presence of foreign matter such as metal, and small weight unevenness is a difference in a basis weight [$g/m^2$] of resin or reinforced fibers contained in the object to be examined. Time required for phase analysis is preferably short because of tact time to be taken per step of a production line. The time required for phase analysis is preferably 30 minutes or less, more preferably 10 minutes or less, and most preferably 5 minutes or less, when intentionally described. The object to be examined may be examined in a state of being conveyed by a device such as a conveyor, or may be examined in a state in which conveyance is stopped in a certain time for examination. When the heating device is used, the infrared sensor may be installed on the same side as the heating device with respect to the object to be examined, the infrared sensor may capture the infrared rays radiated from the surface of the object to be examined after the heat conducted deeply in the object to be examined and returned to the surface of the object to be examined on the heating side. On the other hand, the infrared sensor may be installed on a side opposite to the heating device, and the infrared sensor may capture the infrared rays radiated from the surface of the object to be examined on the opposite side to the heating side after the heat conducted deeply in the object to be examined. When the infrared sensor is installed on the same side as the heating device, it is preferable that a space for installing the entire examination device may be small. When the infrared sensor is installed at a position opposite to the heating device, it is preferable that distribution in the object to be examined can be accurately captured in a thickness direction.

In order to perform processing as described above, it is preferable that the examination device is equipped with a computer for arithmetic analysis to perform phase analysis and for image processing to perform image processing and a drawing monitor for displaying an image. It is common to use a plurality of captured images for phase analysis and the phase analysis performs numerical calculation for Fast Fourier Transform (FFT) using digital data of each pixel of the captured images. A computer having an excellent processing capacity is preferably installed to complete the numerical calculation processing in a short time. In addition, it is preferable that a software for image processing is installed in the computer, a threshold value and an image processing flow can be set in advance in the software to make good or bad determination based on the threshold value at any time after the images are captured. Performing such an operation, it is possible to ascertain the weight unevenness of the object to be examined by analyzing examination data of the radiated infrared rays. Based on a calibration curve prepared in advance for the examination data and basis weight, the basis weight can be digitized, and the weight unevenness may be examined. A spatial average size when handling the weight unevenness is preferably 1 mm $\times$ 1 mm or more and 300 mm $\times$ 300 mm or less, more preferably 3 mm $\times$ 3 mm or more and 150 mm $\times$ 150 mm or less, and most preferably 5 mm $\times$ 5 mm or more and 100 mm $\times$ 100 mm or less.

It is preferable that communication is performed between these software and an apparatus in an upstream process of a manufacturing process of the object to be examined from the apparatus used in the present invention to transmit information of the weight unevenness of the object to be examined obtained from examination data of the radiated infrared rays to the upstream process. It is preferable to apply feedback to the manufacturing process of a composite material or the like in real time by controlling various parameters related to determination and control of the basis weight in a direction in which the weight unevenness is reduced in the apparatus of the manufacturing process of the object to be examined using the transmitted information of the weight unevenness. Further, the various parameters are preferably controlled in a direction in which the weight unevenness is reduced so as to stabilize quality before the weight unevenness of the intermediate or final product exceeds an allowable value. More specifically, there may be a step of adding discontinuous carbon fibers to a position of the object to be examined where basis weight is insufficient or a step of adding an aggregate of discontinuous carbon fibers and/or thermoplastic resin to the position of the object to be examined where a basis weight is insufficient after the examination step is performed, based on results of the feedback. It is preferable to add at least one selected from the group consisting of discontinuous carbon fibers, an aggregate of discontinuous carbon fibers, and thermoplastic resin as described above, since it is possible to correct the weight unevenness, and to reduce the weight unevenness of the composite material and the final product in subsequent steps. In a method for correcting the weight unevenness, it is preferable to supply an aggregate of discontinuous carbon fibers and/or thermoplastic resin from a material quantitative conveyance device within a certain time in accordance with an insufficient amount of the basis weight at the position where a basis weight is insufficient based on image data. After performing the controlling so as stabilizing the quality or after performing the correction operation of the weight unevenness, it is preferable to repeat the examination of the weight unevenness as described above, the feedback of information, and the operation of confirming that the quality is stable and the reduction of the weight unevenness can be achieved.

In addition, it is preferable that a variation coefficient 1 of the basis weight of the aggregate of discontinuous carbon fibers in the object to be examined thus obtained or a variation coefficient 2 of a total basis weight of the deposit is 20% or less. When the variation coefficient is in a range of 20% or less, it is preferable to quickly execute a step of ascertaining the weight unevenness of the above-described object to be examined, a feedback step to a step of manufacturing the aggregate of the discontinuous carbon fibers or the deposit based on the weight unevenness, and a step of controlling various parameters so as to reduce the weight unevenness from the feedback results. In order to execute more quickly and certainly, the variation coefficient is more preferably 0.05% or more and 19.0% or less, and even more preferably 0.1% or more and 18.0% or less.

(Non-destructive examination using X-rays)

The X-rays used in the present invention are general electromagnetic waves having a short wavelength whose radiation mechanism and properties are different from those of usual electromagnetic waves. The wavelength of the X-rays used in the present invention is generally on the order of several hundred angstroms (1 angstrom is 1/100 million centimeters) to 0.01 angstrom and is known to be shorter than a wavelength of ultraviolet rays and longer than a wavelength of $\gamma$ (gamma) rays. In the present invention, X-rays having a single wavelength are not used but X-rays having a wavelength distribution in a certain range are used. It is preferable to contain X-rays having a wavelength of $0.01 \times 10^{-10}$ m to $100 \times 10^{-10}$ m (0.01 angstrom to 100 angstroms).

The X-rays in the present invention are preferably generated by a method as shown below, in which X-rays having an intensity peak in the above-described wavelength range are generally used. In the present invention, X-rays having an intensity peak at a wavelength of less than $1.0 \times 10^{-10}$ m (1.0 angstrom) are preferably used. Particularly, X-rays having an intensity peak at a wavelength of $0.01 \times 10^{-10}$ m to $0.9 \times 10^{-10}$ m are more preferably used, X-rays having an intensity peak at a wavelength of $0.05 \times 10^{-10}$ m to $0.8 \times 10^{-10}$ m are further more preferably used, and X-rays having an intensity peak at $0.1 \times 10^{-10}$ m or more and $0.7 \times 10^{-10}$ m or less is most preferably used.

Main properties of X-rays include a) straightness like light, b) good transmission through a substance, and c) that there are hard X-rays having good transmission (containing many components having a short wavelength) and soft X-rays (containing many components having a long wavelength) having bad transmission. As X-rays transmit through an object, X-rays are attenuated depending on properties of the object. In general, a degree of the attenuation depends on density, thickness, and atomic number of a constituent component of the object through which X-rays transmit.

The X-rays used in the present invention are generally generated by using electrical energy. A filament side of an electrode is used as a cathode, a target side is used as an anode, and a high voltage of a few kVs to hundreds of kVs is applied between the cathode and the anode. X-rays are radiated when thermo electrons, emitted from the filament and accelerated toward the anode, collide with a metal target. The metal target used at this time is preferably tungsten, rhodium, molybdenum, chromium, copper, nickel, iron, or the like. In the present invention, it is preferable to select one type or two types of the metal target among them. Among these metal targets, it is preferable to select tungsten since it is easy to handle and possible to continue examination stably. On the other hand, it is preferable to select copper which emits X-rays having low frequency dependence in consideration of viewpoints of ease of visually recognizing the weight unevenness and foreign matter in the object to be examined. Since a waveband of emitted X-rays is changed by the metal target, the voltage applied to the electrode filament is not particularly limited, but is preferably 10 kV to 200 kV, and more preferably 10 kV to 160 kV. The emitted X-rays are attenuated when transmitting through an object (the object to be examined in the present invention), since the X-rays that transmit through the object are partially reflected or scattered due to an influence of nuclei constituting the object to be examined.

By receiving the attenuated X-rays by a sensor, it is possible to ascertain a transmission intensity of X-rays which have passed through the object. That is, it is possible to ascertain characteristics of the object. The sensor used in X-ray examination can be used in various shapes depending on uses such as a dot shape, a linear shape (line sensor), a planar shape (a flat panel sensor or an area sensor), and a C-type shape. A resolution of the sensor may be determined based on a size of the object desired to be detected, and an amount of X-ray received per unit time (relative exposure amount) depending on X-ray transmission characteristics and a conveyance speed. Devices often used have sensor resolutions of about 0.05 mm, 0.2 mm, 0.4 mm, 0.8 mm, or 1.6 mm. In the present invention, it is preferable to use the device having a sensor resolution of about 0.4 mm or 0.8 mm. The type of the sensor preferably includes charged-coupled devices (CCD) and a complementary metal-oxide-semiconductor (CMOS), and may be forms via a protective film, a scintillator, an amplifier, and an X-ray image intensifier. In addition, sensitivity to X-rays may be higher than that of a general type, or may be another form. For example, a dual energy sensor capable of discerning different substances may be used. When two types of the metal targets are used, sensors corresponding thereto may be prepared, and a plurality of images may be analyzed.

The present invention may capture tomographic images by computed tomography (CT), and may use the tomographic images or tomographic image data. The CT image is basically obtained by: rotating the object to be examined around any one of an X axis, a Y axis, and a Z axis when the object to be examined is placed at an origin of three-dimensional space; applying X-rays from all directions perpendicular to the rotation axis; and analyzing a plurality of images obtained from an X-ray area sensor by numerical value processing. That is, since tomographic images at arbitrary positions of the object to be examined are obtained, it is possible to ascertain distribution in the thickness direction, namely the basis weight, by analyzing the images. At the same time, it is possible to detect a void and a metal piece present in the object to be examined.

More specifically, tomographic images are acquired from an obtained three-dimensional image at regular intervals in the thickness direction of the object to be examined. Each acquired image is divided into certain sections (for example, a square having lengths of 5 mm $\times$ 5 mm), and a spatial average value of digital values in each section is calculated. The same calculation is performed on the tomographic images obtained at regular intervals (for example, every 0.1 mm), and an integrated value of the number of tomographic images in the thickness direction is calculated by using the spatial average value of digital values in the same section of each plane of the object to be examined. Based on the numerical value and a calibration curve prepared in advance with respect to the basis weight, the basis weight can be digitized, and as a result, the weight unevenness can be examined. A size for spatial average when handling the weight unevenness is preferably 1 mm $\times$ 1 mm or more and 300 mm $\times$ 300 mm or less, more preferably 3 mm $\times$ 3 mm or more and 150 mm $\times$ 150 mm or less, and most preferably 5 mm $\times$ 5 mm or more and 100 mm $\times$ 100 mm or less.

In an image capturing method, the object to be examined may be rotated, or the object to be examined may be fixed and an X-ray generator and the X-ray area sensor may be rotated so that a place where the object to be examined is installed is the rotation axis to capture images. In particular, in a case where a state of the object to be examined changes when the object to be examined is rotated, a method of fixing the object to be examined is more preferable. The number of images is preferably 100 to 10000, more preferably 1000 to 5000 in view of resolution and measurement analysis time required for examination. When the method is used, it is preferable to use X-rays having an X-ray intensity peak in a wavelength range of less than $1.0 \times 10^{-10}$ m, and it is more preferable to use X-rays having an intensity peak in a wavelength range of $0.05 \times 10^{-10}$ m to $0.7 \times 10^{-10}$ m.

On the other hand, it is also preferable to perform image processing by using a fluoroscopic image of X-rays in addition to CT imaging. That is, examination of the basis weight is performed non-destructively by using a fluoroscopic image of the object to be examined captured by an X-ray examination device including an X-ray area sensor (X-ray flat panel sensor) or an X-ray line sensor in an examination step or data derived from the fluoroscopic image. For example, an image capturing method may be used by placing the object to be examined on a device driven in one direction, such as a conveyor or a robo cylinder, irradiating the object to be examined with X-rays, and disposing the X-ray line sensor at an opposing position sandwiching the object to be examined with an X-ray source. In addition, in order to capture an image in the thickness direction, an image capturing method may be used in which a straight line connecting the X-ray source and the X-ray line sensor and a conveyance direction of the object to be examined do not intersect at a right angle. The X-ray source and the X-ray line sensor, or the X-ray flat panel sensor (X-ray area sensor) may be one or more separately, and the numbers thereof are not limited. The conveyance speed is not particularly limited, but is preferably 0.1 m/min or more and 1000 m/min or less, more preferably 0.3 m/min or more and 300 m/min or less, and even more preferably 0.5 m/min or more and 100 m/min or less in view of mass productivity and image capturing conditions. The object to be examined may be once stopped and captured using the X-ray flat panel sensor (X-ray area sensor). Since it is most preferable to dispose nothing except for air between the X-ray source and the sensor other than the object to be examined, an image may be captured at a joint between the conveyors. Or a jig may be cut out in a square shape and installed in a conveyor belt or the robo cylinder and an image may be captured using the cut-out part. However, an image may be captured through a thin film, the conveyor belt, a plate or a foil of aluminum alloy or copper alloy for the purpose of protection of equipment, convenience in conveyance, and cutting of frequency of a specific region. Since a distance between the X-ray source and the sensor is determined depending on an image capturing visual field and image capturing conditions, the distance is not particularly limited, but is preferably 0.02 m or more and 7.0 m or less, more preferably 0.05 m or more and 5.0 m or less, and even more preferably 0.1 m or more and 3.0 m or less. When the method is used, it is preferable to use X-rays having an X-ray intensity peak in wavelength range of $0.5 \times 10^{-10}$ m or more, and it is more preferable to use X-rays having an intensity peak in a wavelength range of $0.7 \times 10^{-10}$ m to $2.0 \times 10^{-10}$ m.

In order to perform image capturing as described above, it is preferable that the examination device is equipped with a computer for image processing for performing image processing and a drawing monitor for displaying an image. Image data may be raw data of each pixel detected by the sensor. Further, the image data may be obtained by processing image data by performing filter processing such as: displaying a deviation for a target numerical value on each pixel; displaying a spatial average value of data in a constant pixel section on each pixel; or amplifying the data of each pixel more than 1.0 time. Further, these image data may be used in combination. In the present invention, targets of the examination are objects to be examined having a maximum value of deviation with respect to an average value of the basis weight of 1500 g/m² or less, and examination of the object to be examined having relatively small weight unevenness is assumed. That is, the weight unevenness is obtained as a difference in digital values due to difference in transmittance of X-rays by examination, but the difference in numerical values thereof is small. In order to determine the difference in numerical values as a significant difference that can be distinguished from noise, it is preferable to set the image capturing conditions in which the spatial average of digital values in the fluoroscopic image is 5% or more and less than 100% of a detection limit value of the digital value in the fluoroscopic image. Further, it is preferable that a necessary signal can be taken out by including a step of amplifying digital data of a numerical value based on a relative exposure amount of X-rays or data obtained by arithmetic processing based on the digital data more than 1.0 time. In the former case, the detection limit value of the digital value is preferably 5% or more and less than 100%, more preferably 7% or more and less than 95%, and even more preferably 10% or more and less than 90%. In the latter case, in order to reduce the amplification of noise, the data is preferably set to more than 1.0 time and less than 10.0 times, and more preferably 1.5 times or more and less than 5.0 times.

In addition, a software for image processing is installed in the computer, and it is preferable that a threshold value and an image processing flow can be set in advance in the software. Further, setting is more preferably performed so that good or bad determination can be performed on a threshold set in advance for a while after the image is captured. It is preferable that the result and image data can be stored so that traceability can be ensured.

It is preferable that communication is performed between the software and an apparatus in an upstream process of a manufacturing process of the object to be examined from the apparatus used in the present invention, and information on the weight unevenness of the object to be examined is transmitted to the upstream process. By using information on the transmitted weight unevenness, it is preferable to apply feedback to a manufacturing process of a composite material in real time by controlling various parameters related to determination and control of the basis weight in a direction in which the weight unevenness is reduced in the apparatus of the manufacturing process of the object to be examined. Further, the various parameters are preferably controlled in a direction in which the weight unevenness is reduced so as to stabilize quality before the weight unevenness exceeds an allowable value in the intermediate product or the final product. More specifically, there may be a step of adding discontinuous carbon fibers to a position where basis weight is insufficient or a step of adding an aggregate of discontinuous carbon fibers and/or thermoplastic resin to a position where basis weight is insufficient of the object to be examined based on results of the feedback after the examination step is performed. The weight unevenness can be corrected by adding at least one selected from the group consisting of discontinuous carbon fibers, an aggregate of discontinuous carbon fibers, and thermoplastic resin as described above, and the weight unevenness of the composite material and the final product is reduced in subsequent steps, which is preferable. As a method for correcting the weight unevenness, it is preferable that one selected from the group consisting of discontinuous carbon fibers, an aggregate of discontinuous carbon fibers, and thermoplastic resin is supplied from a material quantitative conveyance device within a certain time in accordance with an insufficient amount of the basis weight at the position where basis weight is insufficient based on image data. After control to stabilize the quality or the correction operation of the weight unevenness is performed, it is preferable to perform examination of the weight unevenness as described above again, perform feedback of information, and repeat an operation of confirming that stability of the quality and reduction of the basis weight can be achieved.

In addition, it is preferable that a variation coefficient 1 of the basis weight of the aggregate of discontinuous carbon fibers in the object to be examined thus obtained or a variation coefficient 2 of a total basis weight of the deposit is 20% or less. When the variation coefficient is in a range of 20% or less, it is preferable to quickly execute a step of ascertaining the weight unevenness of the above-described object to be examined, a feedback step to a step of manufacturing the aggregate of the discontinuous carbon fibers or the deposit based on the weight unevenness, and a step of controlling various parameters in manufacturing so as to reduce the weight unevenness from the feedback results. In order to execute more quickly and certainly, the variation coefficient is more preferably 0.05% or more and 19% or less, and even more preferably 0.1% or more and 18% or less. As a result of executing a parameter control step more quickly and certainly, the object to be examined having small weight unevenness is continuously produced, which is even more preferable.

Based on the numerical value obtained by the fluoroscopic image of X-rays and a calibration curve prepared in advance with respect to the basis weight, the basis weight can be digitized, and as a result, the weight unevenness can be examined. Similarly to a method using CT, a size for spatial average when handling the weight unevenness is preferably 1 mm × 1 mm or more and 300 mm × 300 mm or less, more preferably 3 mm × 3 mm or more and 300 mm × 300 mm or less, and most preferably 5 mm × 5 mm or more and 150 mm × 150 mm or less.

(Object to be examined)

The object to be examined (the object to be examined 1 or the examination object 2) according to the present invention is not particularly limited as long as it is a material capable of non-destructive examination, and various materials and shapes can be used. Here, the object to be examined 1 according to the invention of the manufacturing method is defined as an aggregate of discontinuous carbon fibers, or a deposit containing thermoplastic resin and discontinuous carbon fibers. Then, the object to be examined 2 is defined as any one of the aggregate of discontinuous carbon fibers, the deposit containing thermoplastic resin and discontinuous carbon fibers, a composite material obtained by heating the deposit and impregnating the aggregate of discontinuous carbon fibers with thermoplastic resin, or a molding material to be a final product obtained by re-heating and molding the composite material. That is, the object to be examined 2 further includes the composite material and the final product obtained by processing the composite material with respect to the object to be examined 1. In a state of the composite material or the final product, even if it is possible to measure and examine the weight unevenness, it is difficult to perform processing in which the weight unevenness is reduced based on results of the weight unevenness. So the present invention uses both of them properly. The deposit contains thermoplastic resin and carbon fibers. Particularly, the deposit includes a state in which a particulate, a long fibrous or a short fibrous thermoplastic resin is dispersed in a space in the aggregate of carbon fibers and a state in which a film, a sheet, or a nonwoven fabric made of thermoplastic resin is disposed on at least one surface of the aggregate of carbon fibers.

The deposit containing thermoplastic resin and discontinuous carbon fibers as an aspect of the object to be examined 1 or the object to be examined 2 used in the present invention is a mixture of the above-described aggregate of discontinuous carbon fibers and thermoplastic resin, in which the thermoplastic resin is: pellet-shaped such as spherical, particulate, spindle shaped, cylindrical, and rectangular; fiber-shaped; strip-shaped; sheet-shaped; or film-shaped; and a space between the aggregates of discontinuous carbon fibers or a space between single carbon fibers constituting the discontinuous carbon fibers is not sufficiently filled with the thermoplastic resin. Hereinafter, one of forms of the deposit containing carbon fibers and thermoplastic resin in the present invention may be referred to as a dry mat 1 or a dry mat 2 in Production Examples, Examples, or the like. The aggregate of discontinuous carbon fibers will be described later.

The present invention is suitable for performing examination shown below since the state of the object to be examined can be non-destructively and efficiently performed with a high precision. For example, examination of a) weight unevenness of the aggregate of discontinuous carbon fibers, b) weight unevenness of the deposit containing thermoplastic resin and discontinuous carbon fibers, c) weight unevenness of the composite material in which the deposit is heated to impregnate the discontinuous carbon fibers with the thermoplastic resin, and d) presence or absence of voids and presence or absence of foreign matter such as metal pieces in the molded thermoplastic resin molded article. That is, the present invention is suitable for examination of a metal material or a resin material and production of a metal product or a resin product which includes the examination process. The weight unevenness referred to is a concept including not only a state in which a material constituting a metal product and a resin product is sparsely disposed based on weight, but also a state of a material containing foreign matter such as metal or voids. That is, the weight unevenness means weight unevenness in a broad sense. The object to be examined in the present invention is preferably at least one material selected from the group consisting of: a metal material such as magnesium, aluminum, and steel; a resin material (including thermoplastic resin or thermoplastic resin containing a small amount of thermosetting resin); a ceramic material (an inorganic material other than metal, including glass or carbon material); a fiber reinforced material, and a composite thereof. For example, the fiber reinforced material contains a reinforced fiber and a matrix made of a resin material, a metal material, or a ceramic material. In particular, a composite material which is a fiber reinforced resin containing a resin material and a reinforced fiber (for example, glass fiber reinforced thermosetting resin, glass fiber reinforced thermoplastic resin, carbon fiber reinforced thermosetting resin, or carbon fiber reinforced thermoplastic resin) is preferable. When the object to be examined contains the fiber reinforced material containing the metal material, it goes without saying that the metal piece detected by the examination method of the present invention is a metal piece containing a metal atom other than main metal atoms constituting the fiber reinforced material.

Here, examples of the resin material include thermoplastic resin to be exemplified below, and a resin material containing various additives such as carbon fibers to be described below.

A size of the object to be examined is not particularly limited, but an object to be examined having a certain extent of width is preferable for convenience of production. In order to ensure productivity, a length of one side of the object to be examined needs to be 300 mm or more. It is preferable to use the one side in a width direction which is a right angle direction to a traveling direction of the object to be examined in a process of the object to be examined during production. A length, namely a width of one piece of the object to be examined is preferably 300 mm or more, more preferably 500 mm or more, and even more preferably 1000 mm or more. A shape of the object to be examined is not particularly limited, but examination is easy when the object to be examined is roughly plate-shaped, which is preferable. In view of productivity and subsequent easy processing, the object to be examined preferably has a shape in which sizes in the width direction and the length direction are sufficiently longer than a size in the thickness direction, that is, a plate shape, a plane shape, or a sheet shape. The plate, plane, or sheet shape may have a curved surface in a part thereof. The size in the thickness direction (thickness) is preferably 1.0 mm or more, more preferably 1.5 mm or more and 20 mm or less, still more preferably 1.8 mm or more and 10 mm or less, and most preferably 2.0 mm or more and 5.0 mm or less. Further, the shapes may be a substantially plate shape having a somewhat concavo-convex shape or curved shape in which an object to be examined having a cotton shape such as the deposit of discontinuous carbon fibers is laminated. However, since X-ray examination is generally performed in a space in which X-rays are shielded, a height of an opening portion of a device is preferably kept within a certain range if the opening portion is provided in the device. From the above, although not particularly limited, when the object to be examined has a shape in which a plurality of plate forms are bonded together, the height is preferably 500 mm or less, and more preferably 300 mm or less.

(Thermoplastic resin)

The thermoplastic resin which may be contained in the object to be examined used in the present invention is not particularly limited as long as it is resin capable of obtaining a carbon fiber reinforced resin composite material having desired strength. Thermoplastic resin appropriately selected depending on uses or the like of the carbon fiber reinforced resin composite material can be used.

In general, thermoplastic resin and thermosetting resin are known as a representative matrix resin used in a fiber reinforced composite material. However, in the object to be examined used in the present invention, thermoplastic resin can be suitably used as the matrix resin. However, it is also preferable to use the thermosetting resin and the thermoplastic resin together within a range that the whole matrix resin does not lose characteristics as the thermoplastic resin in the object to be examined in the present invention. The thermoplastic resin is not particularly limited, and thermoplastic resin having a desired softening point or melting point can be appropriately selected and used depending on uses or the like of the deposit or the composite material.

As the thermoplastic resin which may be contained in the object to be examined used in the present invention, thermoplastic resin having a softening point in a range of 180°C to 350°C is generally used, but the present invention is not limited thereto. Examples of the thermoplastic resin can include a polyolefin resin (except for polystyrene resin), a polystyrene resin, a thermoplastic polyamide resin, a polyester resin, a polyacetal resin (polyoxymethylene resin), a polycarbonate resin, a (meth)acrylic resin, a polyarylate resin, a polyphenylene ether resin, a polyimide resin, a polyether nitrile resin, a phenoxy resin, a polyphenylene sulfide resin, a polysulfone resin, a polyketone resin, a polyether ketone resin, a thermoplastic urethane resin, fluororesin, and a thermoplastic polybenzimidazole resin.

Examples of the polyolefin resin can include a polyethylene resin, a polypropylene resin, a polybutadiene resin, a polymethylpentene resin, a polyvinyl chloride resin, a polyvinylidene chloride resin, a polyvinyl acetate resin, and a polyvinyl alcohol resin.

Examples of the polystyrene resin can include a polystyrene resin, a polystyrene-butadiene resin, an acrylonitrile-styrene resin (AS resin), and an acrylonitrile-butadienestyrene resin (ABS resin).

The thermoplastic polyamide resin is preferably at least one selected from the group consisting of PA6 (also referred to as polycaproamide, polycaprolactam, poly-s-caprolactam, and nylon 6), PA26 (polyethylene adipamide), PA46 (polytetramethylene adipamide), PA66 (polyhexamethylene adipamide), PA69 (polyhexamethylene azepamide), PA610 (polyhexamethylene sebacamide), PA611 (polyhexamethylene undecamide), PA612 (polyhexamethylene dodecamide), PA11 (polyundecane amide), PA12 (polydodecane amide), PA1212 (polydodecamethylene dodecamide), PA6T (polyhexamethylene terephthalamide), PA6I (polyhexamethylene isophthalamide), PA912 (polynonamethylene dodecamide), PA1012 (polydecamethylene dodecamide), PA9T (polynonamethylene terephthalamide), PA9I (polynonamethylene isophthalamide), PA10T (polydecamethylene terephthalamide), PA10I (polydecamethylene isophthalamide), PA11T (polyundecamethylene terephthalamide), PA11I (polyundecamethylene isophthalamide), PA12T (polydodecamethylene terephthalamide), PA12I (polydodecamethylene isophthalamide), and polyamide MXD6 (polymethaxylylene adipamide).

Examples of the polyester resin can include a polyethylene terephthalate resin, a polyethylene naphthalate resin, a polytrimethylene terephthalate resin, a polytrimethylene naphthalate resin, a polybutylene terephthalate resin, a polybutylene naphthalate resin, and a liquid crystal polyester.

Examples of the (meth)acrylic resin can include polymethyl methacrylate. Examples of the modified polyphenylene ether resin can include modified polyphenylene ether. Examples of the thermoplastic polyimide resin can include a thermoplastic polyimide, a polyamide-imide resin, and a polyetherimide resin. Examples of the polysulfone resin can include a modified polysulfone resin and a polyether sulfone resin. Examples of the polyether ketone resin can include a polyether ketone resin, a polyether ether ketone resin, and a polyether ketone ketone resin. Examples of the fluororesin can include polytetrafluoroethylene.

The object to be examined used in the present invention may contain only one type or two or more types of thermoplastic resin. Examples of an aspect in which two or more types of the thermoplastic resin are used in combination can include an aspect in which thermoplastic resins having a different softening point or melting point from each other are used in combination and an aspect in which thermoplastic resins having a different average molecular weight from each other are used in combination, but are not limited thereto.

(Carbon fibers)

The carbon fibers contained in the object to be examined used in the present invention are not particularly limited, but can use high strength and high elastic modulus carbon fibers, and may use one type or two or more types of carbon fibers in combination. In general, polyacrylonitrile (PAN)-based carbon fibers, petroleum pitch-based carbon fibers, coal pitch-based carbon fibers, rayon-based carbon fibers, cellulose-based carbon fibers, lignin-based carbon fibers, phenol-based carbon fibers, vapor phase growth-based carbon fibers, or the like are known. The object to be examined in the present invention can suitably use any of the carbon fibers. Among these, carbon fibers such as PAN-based, petroleum pitch-based, coal pitch-based, and rayon-based are preferable.

In particular, polyacrylonitrile (PAN)-based carbon fibers are preferable in view of excellent tensile strength as the carbon fibers contained in the object to be examined used in the present invention. When PAN-based carbon fibers are used as the carbon fibers, tensile strength thereof is preferably in a range of 2000 MPa to 10000 MPa, and more preferably in a range of 3000 MPa to 8000 MPa. A tensile elastic modulus is preferably in a range of 100 GPa to 600 GPa, more preferably in a range of 200 GPa to 500 GPa, and still more preferably in a range of 230 GPa to 450 GPa.

A form of the carbon fibers contained in the object to be examined used in the present invention is not particularly limited, may be continuous fibers or discontinuous fibers, but is preferably continuous fibers as will be described below.

Examples of the continuous fibers include a woven fabric, a knitted fabric, a nonwoven fabric made of long fibers, a mat, a knit, a braid, and a unidirectional material in which carbon fibers are disposed in one direction. A so-called UD sheet (uni-direction sheet) in which continuous fibers are disposed in one direction and formed into a sheet shape may be used. That is, when the object to be examined used in the present invention contains a carbon fiber reinforced resin composite material, the carbon fiber reinforced resin composite material may be a material including one or more UD sheets. Two or more types thereof can be used in combination. When the carbon fibers are disposed in one direction, the carbon fibers can be laminated in multiple layers by changing directions of layers, for example, can be laminated alternately. Laminated surfaces are preferably disposed symmetrically in the thickness direction. A general method can be used for manufacturing a unidirectional material. A unidirectional plastic tape can be prepared by, for example, a method described in JP-A-2013-104056 (Japanese Patent Application Publication), and then may be laminated to form a molded body. In this case, in a case of the UD sheet, a molded body can be used in which the carbon fibers are laminated in multiple layers so that fiber arrangement directions of the layers intersect with each other (for example, laminated alternately in an orthogonal direction).

As a case where the object to be examined is the carbon fiber reinforced resin composite material and the discontinuous fibers are used as the reinforced fiber, a material in which carbon fibers are disposed to be oriented in one specific direction or a plurality of specific directions in the resin, a material in which the discontinuous carbon fibers are randomly dispersed in a two-dimensional in-plane direction in the resin, or a material in which the discontinuous carbon fibers are randomly oriented in a two-dimensional in-plane direction in the resin can be preferably exemplified. The carbon fibers contained in the object to be examined used in the present invention may be discontinuous fibers and may be randomly oriented in the two-dimensional in-plane direction. Here, orienting randomly in the in-plane direction refers to a state in which the carbon fibers are oriented disorderly instead of being oriented in a specific direction such as one direction in the in-plane direction of the object to be examined, and are disposed in a sheet plane as a whole without showing specific directionality. When the carbon fibers are randomly oriented in the in-plane direction, a material having no anisotropy in the in-plane direction of the fiber reinforced resin composite material, namely a substantially isotropic material is preferable. In this case, when the fiber reinforced resin composite material is prepared, a molding material may be formed into a sheet shape by wet sheet forming, or may be formed into a sheet shape or a mat shape (hereinafter, may be referred to as a mat shape together) so that the discontinuous carbon fibers are dispersed and overlapped.

The object to be examined used in the present invention may contain both carbon fibers oriented in one direction and carbon fibers randomly oriented in the in-plane direction. That is, the carbon fiber reinforced resin composite material may contain both the continuous fibers oriented in one direction to form a sheet shape and the discontinuous fibers randomly oriented in the in-plane direction in combination (for example, lamination).

When the discontinuous carbon fibers are used as the carbon fibers contained in the object to be examined used in the present invention, balance of mechanical characteristics, surface smoothness of the molded body, surface uniformity, moldability in molds, and productivity of the carbon fiber reinforced resin composite material is excellent, so that the discontinuous carbon fibers can be preferably applied. Therefore, in the present invention, a case in which the object to be examined uses the thermoplastic resin and the discontinuous carbon fibers randomly oriented in the in-plane direction will be mainly described below.

An average fiber length of the discontinuous carbon fibers which may be contained in the object to be examined used in the present invention is preferably in a range of 1 mm or more, more preferably 1 mm to 100 mm, still more preferably in a range of 3 mm to 90 mm, even more preferably in a range of 10 mm to 80 mm, particularly preferably in a range of 10 mm to 50 mm, and most preferably in a range of 12 mm to 40 mm. When the object to be examined used in the present invention contains carbon fibers as the reinforced fiber, it is preferable that the carbon fibers having the average fiber length in the above range are randomly oriented (two-dimensional random orientation) in a disorderly way in the in-plane direction of the object to be examined in the matrix. The discontinuous carbon fibers in the present invention represent the above-described carbon fibers having an average fiber length of 1 mm to 100 mm.

A mixture of carbon fibers may be used, in which fiber lengths of the discontinuous carbon fibers contained in the object to be examined used in the present invention are different from each other. In other words, the carbon fibers contained in the object to be examined used in the present invention may have a single peak or a plurality of peaks in distribution of the fiber length.

The average fiber length of the discontinuous carbon fibers contained in the object to be examined used in the present invention may be a number average fiber length or a weight average fiber length, but is preferably measured by a weight average fiber length calculated so as to emphasize discontinuous carbon fibers having a long fiber length. When a fiber length of each carbon fiber is Li and a measured number is j, a number average fiber length (Ln) and the weight average fiber length (Lw) are determined by the following mathematical formulas (1-1) and (1-2).

$$Ln = \Sigma Li/j \quad (1\text{-}1)$$

$$Lw = (\Sigma Li^2)/(\Sigma Li) \quad (1\text{-}2)$$

Since the reinforced fiber contained in the object to be examined is obtained by cutting the continuous fibers by a rotary cutter, the number average fiber length and the weight average fiber length has the same value when the fiber length of the reinforced fibers is certain. When the carbon fiber reinforced resin which is an in-plane isotropic base material is obtained by a method to be described below by using the carbon fibers cut as described above, the average fiber length of the carbon fibers in the in-plane isotropic base material is substantially equal to the average fiber length at the time of cutting.

Extraction of the carbon fibers from the deposit or the composite material can be performed by, for example, applying heat treatment of about 500°C $\times$ 1 hour in a furnace to the deposit or the composite material and removing the resin in the furnace.

In general, an average fiber diameter of the carbon fibers used in the present invention is preferably in a range of 3 μm to 50 μm, more preferably in a range of 3.5 μm to 20 μm, still more preferably in a range of 4.0 μm to 12 μm, even more preferably in a range of 4.5 μm to 10 μm, particularly preferably in a range of 5.0 μm to 8.0 μm, and most preferably in a range of 5.5 μm to 7.0 μm. A preferable range of the average fiber diameter of the carbon fibers may be a combination of a lower limit of the ranges described above and an upper limit of another range, for example, 4.5 μm to 20 μm.

Here, the average fiber diameter refers to a diameter of the single fiber of the carbon fiber. Therefore, when the carbon fiber has a fiber bundle shape, the average fiber diameter does not refer to a diameter of the fiber bundle, but refers to the diameter of the carbon fiber (single fiber) constituting the fiber bundle. The average fiber diameter of the carbon fibers can be measured by, for example, a method described in JIS R-7607: 2000.

The carbon fibers contained in the object to be examined used in the present invention may be only single fiber fibers, or may be only fibers in a form of a fiber bundle, or may be a mixture of both. When the fibers in the form of a fiber bundle are used, the number of single fibers constituting each fiber bundle may be substantially uniform or different in each fiber bundle. In the present invention, the aggregate of discontinuous carbon fibers, which is an aspect of the object to be examined, includes an aggregate in which one or two or more carbon fiber bundles are gathered or an aggregate in which one or two or more carbon fibers in a single fiber are further contained in one or two or more carbon fiber bundles. As described above, the fiber length or the average fiber diameter of the carbon fiber bundle or the carbon fiber single fiber may be a mixture of one type or two or more types.

When the carbon fibers constituting the aggregate of discontinuous carbon fibers contained in the object to be examined used in the present invention are in the form of a fiber bundle, the number of single fibers constituting each fiber bundle is not particularly limited. However, in general, the number of single fibers constituting each fiber bundle is preferably in a range of 50 to 1,000,000, more preferably in a range of 100 to 100,000, and even more preferably in a range of 500 to 10,000.

In general, carbon fibers are in the form of a fiber bundle in which several thousands to several tens of thousands of filaments are aggregated. In a case where a carbon fiber bundle is used as the carbon fibers, the carbon fiber bundle used as it is may locally thicken an entangled portion of the fiber bundle, which makes it difficult to obtain a thin deposit or composite material. For this reason, it is common to widen or open the carbon fiber bundle when the carbon fiber bundle is used as the carbon fibers.

When the carbon fiber bundle is opened and used, a degree of opening of the fiber bundle after opening is not particularly limited, but it is preferable to control the degree of opening of the carbon fiber bundle to include a carbon fiber bundle including a specific number or more of carbon fibers, and less than the specific number of carbon fibers (single fibers) or a carbon fiber bundle. In this case, specifically, it is preferable to include a carbon fiber bundle (hereinafter, referred to as a carbon fiber bundle (A)) including a critical number of single fibers defined by the following mathematical formula (2) and other opened carbon fibers, namely a fiber bundle configured in a single fiber state or less than the critical number of single fibers.

$$\text{Critical number of single fibers} = 600/D \qquad (2)$$

(Here, D is an average fiber diameter (μm) of carbon fibers)

Specifically, when the average fiber diameter of the carbon fibers constituting the aggregate of discontinuous carbon fibers is 5 to 7 μm, the number of critical single fibers defined by the above mathematical formula (1) is 86 to 120. When the average fiber diameter of the carbon fibers is 5 μm, the average fiber number in the carbon fiber bundle (A) is in a range of 240 to less than 4000, in particular preferably 300 to 2500. It is more preferably 400 to 1600. When the average fiber diameter of the carbon fibers is 7 μm, the average fiber number in the carbon fiber bundle (A) is in a range of 122 to 2040, in particular preferably 150 to 1500, more preferably 200 to 800.

Further, in the object to be examined used in the present invention, a proportion of the carbon fiber bundle (A) to the total carbon fibers in the object to be examined is preferably more than 0 Vol% and 99 Vol% or less, more preferably 20 Vol% or more and less than 98 Vol%, still more preferably 30 Vol% or more and less than 95 Vol%, particularly preferably 30 Vol% or more and 90 Vol% or less, and most preferably 50 Vol% or more and less than 85 Vol%. This is because it is possible to increase abundance of the carbon fibers in the object to be examined, namely a fiber volume fraction (Vfa) by allowing the carbon fiber bundle including the specific number or more of carbon fibers and the other opened carbon fibers or carbon fiber bundle to coexist at a specific ratio as described above.

The degree of opening of the carbon fibers can be within an intended range by adjusting opening conditions of the fiber bundle. For example, when the fiber bundle is opened by blowing gas such as air to the fiber bundle, the degree of opening can be adjusted by controlling a pressure or the like of the air blown to the fiber bundle. In this case, the degree of opening tends to be high (the number of single fibers constituting each fiber bundle decreases) by increasing the pressure of air, and the degree of opening tends to be low (the number of single fibers constituting each fiber bundle increases) by decreasing the pressure of air.

In the object to be examined used in the present invention, the average fiber number (N) in the carbon fiber bundle (A) can be appropriately determined and is not particularly limited as long as the object of the present invention is not impaired. N is generally in a range of 1 < N < 12000, and more preferable satisfies the following mathematical formula (3).

$$0.6 \times 10^4/D^2 < N < 6 \times 10^5/D^2 \cdot (3)$$

(Here, D is an average fiber diameter ($\mu$m) of carbon fibers)

When the average fiber count (N) in the carbon fiber bundle (A) satisfies the above range, a high fiber volume fraction (Vfa) is easily obtained. Depending on the method for manufacturing the composite material, when the average fiber number (N) in the carbon fiber bundle (A) satisfies the above range, flatness of the carbon fiber reinforced resin composite material is good. When N is more than $0.6 \times 10^4/D^2$, it is preferable to easily obtain a high fiber volume fraction (Vfa). When the average fiber number (N) in the reinforced fiber bundle (A) is less than $6 \times 10^5/D^2$, particularly less than $1 \times 10^5$, it is preferable that a locally thick part is difficult to be generated in the carbon fiber reinforced resin composite material which is a non-impregnated precursor and the final product, and generation of voids is reduced.

The composite material containing carbon fibers, especially the carbon fiber reinforced resin, is lightweight and has excellent mechanical properties such as tensile strength and a tensile elastic modulus, and is preferable for various uses. However, since a high cost by using carbon fibers is an obstacle to adoption in various uses, it is required to reduce a cost ultimately from a raw material of carbon fibers to the production method. Therefore, the present invention is suitable when the object to be examined is the carbon fiber composite material, particularly the carbon fiber reinforced resin, since the present invention eliminates the aggregate of discontinuous carbon fibers, the deposit, and the composite material which do not meet or are supposed not to meet quality requirements from numerical values of the basis weight and weight unevenness from the production process before reaching a final production step, which is preferable. In particular, among the carbon fiber reinforced resin, the in-plane isotropic base material is highly practical in which carbon fibers which are discontinuous fibers are oriented two-dimensionally randomly and contained in the thermoplastic resin as the matrix resin. Therefore, the present invention is suitable for manufacturing of the in-plane isotropic base material, manufacturing of a molded body using the in-plane isotropic base material, and examination of an intermediate in the step at the manufacturing. Examples of such an in-plane isotropic base material and a method for manufacturing the same include those described in US Patent No. 8,946,342, US Patent No. 8,829,103, US Patent No. 9,193,840, US Patent No. 9,545,760, US Patent Application Publication No. 2015/0292145, or the like.

Here, in a case where a two-dimensional random orientation of the reinforced fibers such as carbon fibers is desired to be defined in particular strictly and numerically in the object to be examined, a method described in Japanese Patent No. 5,944,114 can be exemplified. That is, with regard to the reinforced fiber, a state in which a planar orientation degree σ is 90% or more may be defined as a preferable two-dimensional random orientation, the degree σ being defined by:

$$\text{planar orientation degree } \sigma = 100 \times (1 - (\text{number of reinforced fibers having planar orientation}$$
$$\text{angle } \gamma \text{ of } 10° \text{ or more})/(\text{total number of reinforced fibers})).$$

(Composition ratio)

When the object to be examined 1 or the object to be examined 2 used in the present invention is a deposit or a composite material containing thermoplastic resin, the amount of the thermoplastic resin or thermosetting resin can be appropriately determined depending on the type of the resins, the type of carbon fibers, or the like. In general, the resins are in a range of 3 parts by mass to 1000 parts by mass with respect to 100 parts by mass of the carbon fibers. Preferably, the thermoplastic resin is in s range of 10 parts by mass to 900 parts by mass with respect to 100 parts by mass of the carbon fibers, more preferably 20 parts by mass to 400 parts by mass with respect to 100 parts by mass of the carbon fibers, and still more preferably 50 parts by mass to 100 parts by mass with respect to 100 parts by mass of the carbon fibers.

A volume proportion (fiber volume fraction (Vfc)) of carbon fibers contained in the object to be examined defined by the following mathematical formula (4) is preferably 55 Vol% or less based on the volume of the object to be examined (total volume of carbon fibers + total volume of thermoplastic resins) in the object to be examined used in the present invention. The fiber volume fraction is more preferably in a range of 15% to 45%, and still more preferably in a range of 25% to 40%. When the fiber volume fraction of the carbon fibers is 15% or more, a reinforcing effect by containing the carbon fibers is sufficiently appears, which is preferable. Further, when the fiber volume fraction is 55% or less, although due to a molding method, voids are difficult to occur in the composite material or the final product (hereinafter referred to as the composite material or the like) obtained after molding, and the physical properties of the composite material or the like are preferably improved.

$$\text{Vfc} = 100 \times \text{carbon fiber volume}/(\text{carbon fiber volume} + \text{thermoplastic resin}$$
$$\text{volume}) \quad (4)$$

When carbon fibers are randomly oriented in the in-plane direction in the object to be examined used in the present invention, the volume fraction (Vfc) of the carbon fibers in the composite material or the like is preferably 10 Vol% to 70 Vol%. When the volume fraction of the carbon fibers in the composite material or the like is 10 Vol% or more, desired mechanical properties are preferably easily obtained. On the other hand, when the volume fraction is 70 Vol% or less, fluidity of the thermoplastic resin does not decrease during heating when the composite material or the like is prepared, and a desired shape is easily obtained during molding, which is preferable. A more preferable range of the volume fraction of the reinforced fibers in the composite material or the like is 20 Vol% to 60 Vol%, and a still more preferable range thereof is 30 Vol% to 50 Vol%.

(Orientation of carbon fibers)

In the present invention, the discontinuous carbon fibers in the composite material or the like preferably have long axis directions of the fibers randomly oriented in two-dimensional directions in the in-plane direction of the composite material or the like. The composite material or the like in which the carbon fibers are randomly oriented in two dimensions is suitable for obtaining a composite material having excellent isotropy in the in-plane direction and a complicated shape such as concavo-convex shape.

An orientation state of the carbon fibers in the composite material or the like can be measured and evaluated by the following method. For example, a method in which a tensile tests based on one optional direction of the composite material or the like and on a direction orthogonal thereto are performed to measure tensile elastic moduli respectively, and then a ratio (a ratio of tensile elastic moduli: $E\delta$) obtained by dividing a large value by a small value of the measured tensile modulus values is measured. As the ratio of the tensile moduli of the composite material or the like is close to 1.0, the carbon fibers are randomly oriented in the in-plane direction, in other words, randomly oriented in two dimensions, and the composite material or the like can be evaluated as in-plane isotropic. When specific criteria are exemplified, it can be said that the composite material or the like has in-plane isotropy when $E\delta$ is less than 2.0, has excellent in-plane isotropy when $E\delta$ is 1.5 or less, and has extremely excellent in-plane isotropy when $E\delta$ is 1.3 or less.

The orientation state in the composite material or the like used in the present invention is preferably the two-dimensional random orientation. However, there may be a part oriented in one direction as long as it does not deviate from the object of the present invention and does not affect the mechanical properties and moldability of the composite material or the like used in the present invention. In addition, the orientation state may be an irregular orientation between the one direction orientation and the two-dimensional random orientation (an orientation state in which longitudinal directions of the reinforced fibers are not completely oriented in one direction but not completely random). Depending on the fiber length of the carbon fibers, the long axis direction of the carbon fibers may be oriented so as to have an angle with respect to the in-plane direction of the composite material or the like, or the carbon fibers may be oriented so that the carbon fibers entwined like cotton, or the carbon fibers may be oriented as a bidirectional fabric such as plain weave or twill weave, a multi-spindle fabric, a nonwoven fabric, a mat, a knit, a braid, a paper on which carbon fibers are made, or the like.

(Additive)

As described above, the composite material or the like used in the present invention contains at least carbon fibers and thermoplastic resin or thermosetting resin, but may contain various additives as necessary as long as the object of the present invention is not impaired. The various additives are not particularly limited as long as they can impart a desired function or property to the composite material or the like depending on uses or the like.

Examples of the various additives which may be included in the object to be examined used in the present invention can include melt viscosity reducing agents, antistatic agents, softening agents, plasticizers, surfactants, conductive particles, fillers other than reinforced fibers, carbon black, coupling agents, foaming agents, lubricants, corrosion inhibitors, crystal nucleating agents, crystallization accelerators, mold release agents, stabilizers, ultraviolet absorbers, pigments, colorants, anti-coloring agents, antioxidants, flame retardants, flame retardant aids, anti-dripping agents, fluorescent whitening agents, luminous pigments, fluorescent dyes, flow modifiers, inorganic or organic antibacterial agents, repellents, photocatalytic antifouling agents, infrared absorbers, and photochromic agents.

(Production of composite material or the like containing discontinuous carbon fibers)

In the present invention, in the case of manufacturing the composite material by using the deposit including the aggregate of discontinuous carbon fibers and thermoplastic resin as a material, or in the case of manufacturing a final product of a composite material by using the composite material as a material, the composite material or the final product can be produced applying a general processing method in the field of the carbon fiber reinforced composite material. Atypical production method includes a press molding method (cold press molding method, hot press molding method). Besides, an injection molding method, an injection compression molding method, an extrusion molding method, an insert molding method, an in-mold coating molding method, or the like can also be used. Specifically, at the time of manufacturing of the composite material, it is preferable to apply any of the above molding methods to the above deposit. Specifically, first, the deposit is heated to equal to or higher than a softening point or a melting point of the thermoplastic resin constituting the deposit, and then the aggregate of the discontinuous carbon fibers is impregnated with at least a part of the thermoplastic resin constituting the deposit by any of the above molding methods to manufacture the composite material. In this case, that the aggregate of the discontinuous carbon fibers is impregnated with the thermoplastic resin includes both of a case in which the thermoplastic resin is disposed so as to fill spaces between the discontinuous carbon fibers and a case in which the thermoplastic resin is disposed so as to fill spaces between the single fibers of the discontinuous carbon fibers which constitute the aggregate of the discontinuous carbon fibers. Hereinafter, one form of the composite material in the present invention may be referred to as an impregnated base material n (n = 1 to 3) in Production Examples, Examples, or the like. The composite material corresponds to the deposit in the present invention, which is obtained by heating and molding the dry mat described above.

EXAMPLES

Examples are shown below, but the present invention is not limited thereto. Values in the present example were determined according to the following method.

1) Calculation of proportion of carbon fiber bundles (A) in fiber reinforced resin material

A method for determining the proportion of the carbon fiber bundles (A) contained in the fiber reinforced resin material is as follows. The fiber reinforced resin material was cut into a size of 50 mm $\times$ 50 mm and heated for about one hour in a furnace at 500°C, the thermoplastic resin was completely removed. Then all the fiber bundles were taken out with tweezers, and a length (Li) and a mass (Wi) of the fiber bundles and a fiber bundle number (I) were measured. A mass of fiber bundles small enough not to be taken out with tweezers was measured as a whole (Wk). A balance that can measure a mass up to 1/100 mg is used for measuring the mass.

After the measurement, the following calculation was performed. From fineness (F) of the carbon fibers used, the number of fibers (Ni) of each fiber bundle was determined by the following mathematical formula.

$$\text{Number of fibers (Ni)} = \text{Wi}/(\text{Li} \times \text{F}) \quad (5)$$

The average fiber number (N) in the carbon fiber bundle (A) was determined by the following mathematical formula.

$$N = \Sigma Ni/I \quad (6)$$

A proportion (VR) of a volume of the carbon fiber bundle (A) to entire reinforced fibers was determined by the following mathematical formula by using a density (ρ) of the carbon fibers.

$$VR = \Sigma(Wi/\rho) \times 100/((Wk + \Sigma Wi)/\rho) \quad (7)$$

2) Weight average carbon fiber length of reinforced fibers

For the weight average carbon fiber length of the reinforced fibers, the thermoplastic resin was completely removed from the fiber reinforced resin material by the above operation, and then fiber lengths of 100 randomly extracted reinforced fibers were measured up to units of 1 mm by a caliper or the like. In general, when a fiber length of an individual carbon fiber is Li, a number average fiber length Ln and a weight average fiber length Lw are determined by the following mathematical formulas (1-1) and (1-2). Units of the number average fiber length Ln and the weight average fiber length Lw are both mm.

$$Ln = \Sigma Li/I \quad (1\text{-}1)$$

$$Lw = (\Sigma Li^2)/(\Sigma Li) \quad (1\text{-}2)$$

Here, "I" represents the number of carbon fibers whose fiber lengths are measured.

3) Analysis of carbon fiber orientation in prepreg

As a method of measuring isotropy of the carbon fibers after manufacturing the prepreg, tensile tests based on one optional direction of a molded plate and on a direction orthogonal thereto was performed to measure tensile elastic moduli, and a ratio (a ratio of tensile elastic moduli: E$\delta$) obtained by dividing a large value by a small value of the measured tensile modulus values was measured. As the ratio of the tensile moduli is close to 1.0, the isotropy is excellent. Specifically, when E$\delta$ is less than 2, the orientation is evaluated as in-plane isotropy, namely an two-dimensional random orientation was obtained. The molded plate for analysis of the fiber orientation in Examples was molded under the same conditions as production conditions of the prepreg in Examples.

4) Type analysis of thermoplastic resin

The type (primary structure) of the thermoplastic fiber was specified by performing $^1$H-NMR measurement (JEOLA-600 manufactured by JEOL Ltd.) of a sampled minute piece and analyzing a spectrum chart.

5) Measurement and evaluation of length of object to be examined

A length of an object to be examined was measured by a measure with a scale in a unit of 1 mm.

[Production Example 1]

Production of mixed dry mat of carbon fibers and resin (hereinafter referred to as dry mat 1)

A carbon fiber "TENAX" (registered trademark) STS40-24KS (average fiber diameter 7 $\mu$m) manufactured by Teijin Limited cut into an average fiber length of 20 mm was used as the carbon fibers. A particulate chip of nylon 6 resin A1030 manufactured by Unitika Ltd. which is thermoplastic resin was used as the matrix resin. The dry mat 1 in which carbon fibers were randomly dispersed in the in-plane direction (randomly oriented in two dimensions) was prepared aiming for a carbon fiber basis weight of 1500 g/m$^2$ and a nylon resin basis weight of 2100 g/m$^2$ with reference to a method described in International Publication WO 2012/105080 using the carbon fibers and thermoplastic resin.

Specifically, a metal alloy slitter was disposed in an opening device of carbon fibers to perform slitting. A metal alloy cutter was used in a cutting device, and a pitch of blades was adjusted to cut the carbon fibers to a fiber length of 20 mm.

A strand which had passed through the cutter was introduced into a transport pipe disposed directly below the cutter, and continuously introduced into an opening device. A tube was produced and used as the opening device. Compressed air was fed into the tube for opening.

A particulate thermoplastic resin (nylon 6 resin) was supplied from a side of the tube. An air permeable support (hereinafter, referred to as a fixing net) moving in a constant direction was installed under a tube outlet, and suction was performed by a blower from under the fixing net. Next, a mixture of cut carbon fibers and nylon resin was deposited on the fixing net in a band shape while reciprocating the flexible transport pipe and the tube in a width direction. Then, the device was operated with setting a supply amount of the reinforced fibers and a supply amount of the matrix resin, the reinforced fibers and the thermoplastic resin were mixed on the fixing net, and a dry mat 1 of 1000 mm × 500 mm was obtained.

[Production Example 2]

Method for manufacturing carbon fiber reinforced resin impregnating base material

The dry mat 1 obtained in Production Example 1 was heated and compressed for 15 minutes in an impregnation device heated to 260°C to obtain an impregnated base material 1 having a thickness of 2.6 mm.

[Production Example 3]

Production of partially impregnated base material of carbon fiber reinforced resin

Referring to Production Example 2, an impregnated base material was prepared by the same method except that the heating time was changed to 10 minutes, the compression conditions were changed, and the weight unevenness was changed to obtain an impregnated base material 2 having a thickness of 2.6 mm.

[Production Example 4]

Production of impregnated base material in which metal piece is embedded in carbon fiber reinforced resin

An impregnated base material was prepared in the same method as in Production Example 2 by using the dry mat obtained by the same method as in Production Example 1 except that an aluminum piece of 30 mm × 30 mm × 0.5 mm was embedded in a step of depositing a mixture of the cut carbon fibers and nylon resin of Production Example 1 to obtain an impregnated base material 3 having a thickness of 2.6 mm.

[Production Example 5]

Production of dry mat of carbon fibers (hereinafter referred to as dry mat 2)

Referring to Production Example 1, a dry mat was prepared in the same method as in Production Example 1 except that one nonwoven fabric-shaped thermoplastic resin was disposed under the carbon fibers instead of supplying the particulate thermoplastic resin to obtain the dry mat 2.

A) Examples using phase analysis method of infrared image

[Example 1-1]

Examination of basis weight and weight unevenness of impregnated base material

The impregnated base material 1 obtained in Production Example 2 (hereinafter, may be referred to as a material) was heated while being conveyed in a long direction of the impregnated base material 1 with a belt conveyor, and infrared rays radiated from the material were captured and analyzed using a phase analysis method. Specifically, the material was heated while being conveyed with a belt conveyor (conveyance speed of 1 m/min), and radiation of infrared rays from a heating material during conveyance was detected. A fiber laser (output: 1.5 kW) of Laserline GmbH and a collimator for expanding the laser to a width of 500 mm were used for heating. In infrared detection, an infrared camera (area sensor of 640 × 512 pixels) of FLIR Systems, Inc. was used to perform image analysis on an effective examination unit of a moving image obtained by the infrared camera by using a phase analysis simulation software of infrared rays. At this time, the infrared camera was disposed at a position facing a position of the fiber laser, which is a heating device of the material. The used infrared camera was a camera having a resolution with a temperature amplitude of 0.05 degC (°C). The step was repeated so that a whole material having a size of 1000 mm × 500 mm was examined in a width of 500 mm and a length of 100 mm. Phase image information of the obtained material was partitioned by 50 mm × 50 mm to calculate a spatial average value, and digitized and drawn. At this time, time required for phase analysis was less than 5 minutes. As a result of the examination, when the basis weight of each of 200 positions of the 50 mm × 50 mm partition of the base material was calculated, it was confirmed that 150 g/m$^2$ or more of the weight unevenness can be detected. A maximum value of deviation of the basis weight from an average value of the basis weight was 1500 g/m$^2$ or less.

[Example 1-2]

Void examination of impregnated base material

The same method as in Example 1-1 was used to perform examination except that the impregnated base material 2 obtained in Production Example 3 was used.
As a result of the examination, it was confirmed that a void which was not partially impregnated can be detected. Since the basis weight of the part including the void is smaller than that of the impregnated base material itself, it can be said that the weight unevenness of the impregnated base material 2 can be ascertained by the method.

[Example 1-3]

Metal foreign matter examination of impregnated base material

The same method as in Example 1-1 was used to perform examination except that the impregnated base material 3 obtained in Production Example 4 was used.
As a result of the examination, it was confirmed that an embedded aluminum piece can be detected. Since the basis weight of an embedded part of the aluminum piece is larger than that of the impregnated base material itself, it can be said that the weight unevenness of the impregnated base material 3 can be ascertained by the method.

[Example 1-4]

Basis mass examination of mixed dry mat of carbon fibers and resin

Examination was performed using the same method as in Example 1-1, except that the dry mat 1 obtained in Production Example 1 was used.
As a result of the examination, when the basis weight of each of 200 positions of the 50 mm $\times$ 50 mm partition of the base material was calculated, it was confirmed that 150 $g/m^2$ or more of the weight unevenness can be detected. A maximum value of deviation of the basis weight from an average value of the basis weight was 1500 $g/m^2$ or less.

[Example 1-5]

Basis mass examination of carbon fiber dry mat

Examination was performed using the same method as in Example 1-1, except that the dry mat 5 obtained in Production Example 2 was used.
As a result of the examination, when the basis weight of each of 200 positions of the 50 mm $\times$ 50 mm partition of the base material was calculated, it was confirmed that 150 $g/m^2$ or more of the weight unevenness can be detected. A maximum value of deviation of the basis weight from an average value of the basis weight was 1500 $g/m^2$ or less.

B) Examples in which X-ray CT image was analyzed

[Example 2-1]

Examination of basis weight and weight unevenness of impregnated base material

An impregnated base material 1A(100 mm $\times$ 300 mm) with only different dimensions prepared by the same method as in Production Example 2 was disposed in an X-ray CT apparatus in directions of a width of 300 mm and a length of 100 mm to perform examination analysis. Specifically, the X-ray CT apparatus (MCT225, image capturing conditions in which a spatial average of digital values of an effective examination area is about 55% of a sensor limit value) equipped with an area sensor of Nikon Instech Co., Ltd. was used. A wavelength band having an intensity peak of X-rays in a range of $0.1 \times 10^{-10}$ m to $0.2 \times 10^{-10}$ m was used as a wavelength of X-rays and an image was captured at a Voxel size of 120 $\mu$m. With respect to an effective examination part of tomographic image data obtained by X-ray CT, image analysis was performed using VG studio manufactured by Volume Graphics, image information of the obtained material was partitioned by 50 mm $\times$ 50 mm to calculate a spatial average value, and digitized and drawn data was obtained.
As a result of the examination, when the basis weight of each of 12 positions of the 50 mm $\times$ 50 mm partition of the base material was calculated, it was confirmed that 100 $g/m^2$ or more of the weight unevenness can be detected.

A maximum value of deviation of the basis weight from an average value of the basis weight was 1500 g/m$^2$ or less.

[Example 2-2]

Void examination of impregnated base material

An impregnated base material 2A (100 mm $\times$ 300 mm) with only different dimensions prepared by the same method as in Production Example 3 was examined using the same method as in Example 2-1, except that the impregnated base material 2A was used for examination.

As a result of the examination, it was confirmed that voids partially present in the material can be detected. Since the basis weight of the part including the void impregnated base material 2A is smaller than that of the impregnated base material itself, it can be said that the weight unevenness of the impregnated base material 2A can be ascertained by the method.

[Example 2-3]

Metal foreign matter examination of impregnated base material

An impregnated base material 3A(100 mm $\times$ 300 mm) with only different dimensions prepared by the same method as in Production Example 4 was examined using the same method as in Example 2-1, except that it was used for examination.

As a result of the examination, it was confirmed that an embedded aluminum piece can be detected. Since the basis weight of an embedded part of the aluminum piece is larger than that of the impregnated base material itself, it can be said that the weight unevenness of the impregnated base material 3A can be ascertained by the method.

[Example 2-4]

Basis weight examination of mixed dry mat of carbon fibers and resin

A dry mat 1A(100 mm $\times$ 300 mm) with only different dimensions prepared by the same method as in Production Example 1 was disposed in an X-ray CT apparatus to perform examination analysis. Specifically, an X-ray CT apparatus (Stella Scan AX) equipped with an area sensor of Rigaku Corporation was used. A wavelength band having an X-ray intensity peak in a range of 0.5 $\times$ 10$^{-10}$ m to 0.6 $\times$ 10$^{-10}$ m was used as the wavelength of X-rays. With respect to an effective examination part of an image obtained by X-ray CT, image analysis was performed using an image analysis software, image information of the obtained material was partitioned by 50 mm $\times$ 50 mm to calculate a spatial average value, and digitized and drawn data was obtained.

As a result of the examination, when the basis weight of each of 12 positions of the 50 mm $\times$ 50 mm partition of the base material was calculated, it was confirmed that 100 g/m$^2$ or more of the weight unevenness can be detected. A maximum value of deviation of the basis weight from an average value of the basis weight was 1500 g/m$^2$ or less.

[Example 2-5]

Basis weight examination of carbon fiber dry mat

A dry mat 2A(100 mm $\times$ 300 mm) with only different dimensions prepared by the same method as in Production Example 5 was examined using the same method as in Example 2-4, except that it was used for examination.

As a result of the examination, when the basis weight of each of 12 positions of the 50 mm $\times$ 50 mm partition of the base material was calculated, it was confirmed that 100 g/m$^2$ or more of the weight unevenness can be detected. A maximum value of deviation of the basis weight from an average value of the basis weight was 1500 g/m$^2$ or less.

Data of the weight unevenness was fed back to the production process. A supply amount of the carbon fibers was adjusted at a place where the basis weight was insufficient to an aiming basis weight. When the mixed dry mat of the carbon fibers subjected to the adjustment was confirmed again in the same basis weight examination step, a carbon fiber dry mat having a basis weight variation coefficient 1 of 12% (variation coefficient before adjustment of 25%) was obtained.

C) Examples in which X-ray fluoroscopic image analysis was performed

[Example 3-1]

Examination of basis weight and weight unevenness of impregnated base material

The impregnated base material 1 obtained in Production Example 2 was irradiated with X-rays in the longitudinal direction of the impregnated base material 1 while being conveyed with a belt conveyor, the X-rays transmitted through the impregnated base material 1 was captured by a line sensor and analyzed using an X-ray fluoroscopic image. Specifically, the impregnated base material 1 was conveyed with a robo cylinder (conveyance speed: 1.5 m/min) of IAI Corporation. An X-ray fluoroscopic image was captured with respect to the impregnated base material using an X-ray generator of SOFTEX (wavelength band having intensity peaks: $1.5 \times 10^{-10}$ m to $1.6 \times 10^{-10}$ m, image capturing conditions in which a spatial average of digital values of an effective examination area is about 60% of a sensor limit value) and an X-ray line sensor of Image Tech, Inc. (0.4 mm resolution, sensor gain of 1 time). The captured image data was subjected to image analysis by using ImageJ manufactured by NIH and a software manufactured by Teijin Limited.
A whole material having a size of 1000 mm $\times$ 500 mm was examined in a width of 500 mm and a length of 100 mm by the above step. Obtained image information of the material was partitioned by 50 mm $\times$ 50 mm to calculate a spatial average value, and digitized and drawn.
As a result of the examination, when the basis weight of each of 200 positions of the 50 mm $\times$ 50 mm partition of the base material was calculated, it was confirmed that 100 g/m$^2$ or more of the weight unevenness can be detected. A maximum value of deviation of the basis weight from an average value of the basis weight was 1500 g/m$^2$ or less.

[Example 3-2]

Void examination of impregnated base material

The impregnated base material 2 prepared by the same method as in Production Example 3 was examined using the same method as in Example 3-1, except that an X-ray generator of Kinki Roentgen Industrial Co., Ltd. (wavelength band having intensity peaks: $0.8 \times 10^{-10}$ m to $0.9 \times 10^{-10}$ m, image capturing conditions in which a spatial average of digital values of an effective examination area is about 20% of a sensor limit value) was used for examination.
As a result of the examination, it was confirmed that a void which was not partially impregnated can be detected. Since the basis weight of the part including the void is smaller than that of the impregnated base material itself, it can be said that the weight unevenness of the impregnated base material 2 can be ascertained by the method.

[Example 3-3]

Metal foreign matter examination of impregnated base material

The impregnated base material 3 prepared by the same method as in Production Example 4 was examined using the same method as in Example 3-2, except that it was used for examination.
As a result of the examination, it was confirmed that an embedded aluminum piece can be detected. Since the basis weight of an embedded part of the aluminum piece is larger than that of the impregnated base material itself, it can be said that the weight unevenness of the impregnated base material 3 can be ascertained by the method.

[Example 3-4]

Basis mass examination of mixed dry mat of carbon fibers and resin

The dry mat 1 prepared by the same method as in Production Example 1 was examined using the same method as in Example 3-1, except that image capturing conditions in which a spatial average of digital values of an effective examination area is about 25% of a sensor limit value were used for examination.
As a result of the examination, when the basis weight of each of 200 positions of the 50 mm $\times$ 50 mm partition of the base material was calculated, it was confirmed that 100 g/m$^2$ or more of the weight unevenness can be detected. A maximum value of deviation of the basis weight from an average value of the basis weight was 1500 g/m$^2$ or less.

[Example 3-5]

Basis weight examination of mixed dry mat of carbon fibers and resin

The dry mat 1 prepared by the same method as in Production Example 1 was examined using the same method as in Example 3-4, except that image capturing conditions in which a spatial average of digital values of an effective examination area is about 60% of a sensor limit value were used for examination.
As a result of the examination, when the basis weight of each of 200 positions of the 50 mm × 50 mm partition of the base material was calculated, it was confirmed that 100 g/m$^2$ or more of the weight unevenness can be detected. A maximum value of deviation of the basis weight from an average value of the basis weight was 1500 g/m$^2$ or less.
Data of the weight unevenness was fed back to the production process. A supply amount of the carbon fibers and resin was adjusted at a place where the basis weight was insufficient to an aiming basis weight. When the mixed dry mat of the carbon fibers and resin subjected to the adjustment was confirmed again in the same basis weight examination step, the mixed dry mat of the carbon fibers and resin having a basis weight variation coefficient of 18% (variation coefficient before adjustment: 32%) was obtained.

[Example 3-6]

Basis mass examination of mixed dry mat of carbon fibers and resin

The dry mat 1 prepared by the same method as in Production Example 1 was examined using the same method as in Example 3-5, except that numerical data based on a relative exposure amount of the received X-rays was amplified 2.0 times by amplifying the sensor gain 2.0 times.
As a result of the examination, when the basis weight of each of 200 positions of the 50 mm × 50 mm partition of the base material was calculated, it was confirmed that 100 g/m$^2$ or more of the weight unevenness can be detected. A maximum value of deviation of the basis weight from an average value of the basis weight was 1500 g/m$^2$ or less. Further, life of a bulb of the X-ray generator was at least 10% longer.

[Example 3-7]

Basis weight examination of carbon fiber dry mat

The dry mat 2 prepared by the same method as in Production Example 5 was examined using the same method as in Example 3-5, except that it was used for examination.
As a result of the examination, when the basis weight of each of 200 positions of the 50 mm × 50 mm partition of the base material was calculated, it was confirmed that 100 g/m$^2$ or more of the weight unevenness can be detected. A maximum value of deviation of the basis weight from an average value of the basis weight was 1500 g/m$^2$ or less.

[Example 3-8]

Basis weight examination of carbon fiber dry mat

A dry mat 1A(100 mm × 300 mm) with only different dimensions prepared by the same method as in Production Example 1 was disposed in an X-ray transmission apparatus to perform examination analysis. Specifically, the X-ray transmission apparatus (Stella Scan AX, which also has an X-ray CT function, image capturing conditions in which a spatial average of digital values of an effective examination area is about 20% of a sensor limit value) equipped with an area sensor of Rigaku Corporation was used. A wavelength band having an X-ray intensity peak in a range of 0.8 × 10$^{-10}$ m to 0.9 × 10$^{-10}$ m was used as the wavelength of X-rays. With respect to an effective examination part of image data obtained by X-ray transmission capturing, image analysis was performed by partitioning image information of the obtained material by 5 mm × 5 mm and calculating a spatial average value by using ImageJ manufactured by NIH and a software manufactured by Teijin Limited, and as a result, digitized and drawn data was obtained.
As a result of the examination, when the basis weight of each of 1200 positions of the 5 mm × 5 mm partition of the base material was calculated, it was confirmed that 200 g/m$^2$ or more of the weight unevenness can be detected. A maximum value of deviation of the basis weight from an average value of the basis weight was 1500 g/m$^2$ or less.

[Comparative Example 1]

When the dry mat 1 obtained in Production Example 1 was cut into a size of 25 mm × 25 mm and the basis weight was measured with an electronic balance, the weight unevenness was 180 g/m$^2$ at most, so that there was no problem. However, since the material was cut into small pieces, a composite material having a desired size could not be produced.

[Comparative Example 2]

The dry mat 1 obtained in Production Example 1 was continuously prepared in a width of 400 mm without anything particular of an examination operation of weight unevenness caused by non-destructive examination, a feedback operation of the examination result, and an operation of reducing the weight unevenness of the deposit based on the feedback. This continuously prepared dry mat was subjected to the same operation as the operation in Production Example 2, and was continuously impregnated with the thermoplastic resin in an impregnation furnace to obtain an impregnated base material having a length of 80 m.

Next, when the same operation as the operation in Comparative Example 1 was performed and the impregnated base material was subjected to destructive examination, it was found that the weight unevenness gradually increased from a place 20 m or more from the head of the impregnated base material. In detail, a variation coefficient of the basis weight was 40% or more from a place of 60 m or more from the head of the impregnated base material. As described above, in comparison with Comparative Example 1, more detailed numerical data of the weight unevenness could be obtained. However, "since" the impregnated base material was cut into a size of 25 mm × 25 mm, a composite material having a desired size could not be obtained. If feedback control to examine a state of the material before continuous impregnation and to reduce the weight unevenness of the material before impregnation was made, it was possible that at least degradation in quality of the material in the length of the impregnation furnace could be reduced.

INDUSTRIAL APPLICABILITY

According to the present invention, examination of presence or absence of foreign matter mixed inside the material or presence or absence of a void inside the material and quantitative examination of slight weight unevenness of the material are possible. Further, it is possible to provide a method for manufacturing a carbon fiber composite material in which weight unevenness is prevented or reduced by undergoing the examination process. In industries which manufactures or uses the carbon fiber reinforced resin composite material in the future, significance of the present invention is extremely large.

**Claims**

1.  A method for manufacturing a deposit containing thermoplastic resin and discontinuous carbon fibers, wherein a length of one side of the deposit is 300 mm or more, the method manufacturing the deposit through the following steps:

    Step 101: an examination step of non-destructively examining a basis weight of either an aggregate of the discontinuous carbon fibers or the deposit -hereinafter, referred to as an object to be examined 1,
    Step 201: a step of ascertaining weight unevenness of the object to be examined 1 based on examination results of the step 101, and
    Step 301: a step of adding the discontinuous carbon fibers to a position of the aggregate of the discontinuous carbon fibers where the basis weight is insufficient so as to reduce the weight unevenness, or a step of adding the aggregate of the discontinuous carbon fibers and/or the thermoplastic resin to a position of the deposit where the basis weight is insufficient so as to reduce the weight unevenness based on the weight unevenness of the step 201.

2.  The method for manufacturing a deposit according to claim 1, further comprising following step 202 after the step 201:
    Step 202: a step of feeding back the weight unevenness of the object to be examined 1 obtained in the step 201 to a step of manufacturing the object to be examined 1.

3.  The method for manufacturing a deposit according to claim 1 or 2, wherein a variation coefficient 1 of the basis weight of the aggregate of the discontinuous carbon fibers or a variation coefficient 2 of the total basis weight of the deposit is 20% or less by the steps.

4.  The method for manufacturing a deposit according to any one of claims 1 to 3, wherein the examination step includes

    detecting infrared rays radiated from the object to be examined 1 and

using a phase analysis method.

5. The method for manufacturing a deposit according to claim 4, further comprising heating the object to be examined 1 using a fiber laser to detect the infrared rays radiated from the object to be examined 1.

6. The method for manufacturing a deposit according to claim 5, wherein the laser is passed through a device capable of adjusting an irradiation range of the laser, and then the object to be examined 1 is heated to detect the infrared rays.

7. The method of manufacturing a deposit according to any one of claims 1 to 3, wherein the examination step uses a tomographic image obtained by capturing the object to be examined 1 by X-ray CT or data of the tomographic image.

8. The method for manufacturing a deposit according to claim 7, using X-rays having an X-ray intensity peak at a wavelength of less than $1.0 \times 10^{-10}$ m.

9. The method for manufacturing a deposit according to any one of claims 1 to 3, wherein the examination step uses a fluoroscopic image obtained by capturing the object to be examined 1 by using an X-ray examination device including an X-ray area sensor or an X-ray line sensor or data derived from the fluoroscopic image.

10. The method for manufacturing a deposit according to claim 7 or 9, wherein a spatial average of digital values in the tomographic image or the fluoroscopic image of the object to be examined 1 is 5% or more and less than 100% of a limit value of a digital value in the tomographic image or the fluoroscopic image.

11. The method for manufacturing a deposit according to claim 9 or 10, using X-rays having an X-ray intensity peak at a wavelength of less than $0.5 \times 10^{-10}$ m.

12. The method for manufacturing a deposit according to any one of claims 9 to 11, further comprising a step of amplifying numerical data more than 1.0 time, the numerical data being based on a relative exposure amount of X-rays received by the X-ray area sensor or the X-ray line sensor.

13. The method for manufacturing a deposit according to any one of claims 1 to 12, wherein a maximum value of deviation with respect to an average value of the basis weight of the object to be examined 1 examined in the examination step is 1500 g/m$^2$ or less.

14. The method for manufacturing a composite material comprising:
heating the deposit according to any one of claims 1 to 13 to impregnate the aggregate of the discontinuous carbon fibers with at least a part of the thermoplastic resin.

15. The method for manufacturing a composite material according to claim 14 further comprising:
Examining of presence or absence of foreign matter mixed inside the composite material or presence or absence of a void inside the material.

## Patentansprüche

1. Verfahren zur Herstellung eines Abscheidungsmaterials, das ein thermoplastisches Harz und Kohlenstoff-Schnittfasern enthält, wobei eine Länge einer Seite des Abscheidungsmaterials 300 mm oder mehr beträgt, wobei das Verfahren zur Herstellung des Abscheidungsmaterials die folgenden Schritte umfasst:

Schritt 101: einen Untersuchungsschritt des zerstörungsfreien Untersuchens eines Basisgewichts von entweder einer Ansammlung aus Kohlenstoff-Schnittfasern oder des Abscheidungsmaterials - nachstehend als zu untersuchender Gegenstand 1 bezeichnet,
Schritt 201: einen Schritt der Bestimmung einer Gewichtsungleichheit des zu untersuchenden Gegenstands 1 auf der Grundlage von Untersuchungsergebnissen von Schritt 101, und
Schritt 301: einen Schritt des Zugebens der Kohlenstoff-Schnittfasern an einer Stelle der Ansammlung aus Kohlenstoff-Schnittfasern, an der das Basisgewicht unzureichend ist, um die Gewichtsungleichheit zu verringern, oder einen Schritt des Zugebens der Ansammlung aus Kohlenstoff-Schnittfasern und/oder des thermoplastischen Harzes an einer Stelle des Abscheidungsmaterials, an der das Basisgewicht unzureichend ist, um die Gewichtsungleichheit auf der Grundlage der Gewichtsungleichheit von Schritt 201 zu verringern.

2. Verfahren zur Herstellung eines Abscheidungsmaterials nach Anspruch 1, darüber hinaus nach dem Schritt 201 nachfolgenden Schritt 202 umfassend:
Schritt 202: einen Schritt des Rückmeldens der in Schritt 201 erhaltenen Gewichtsungleichheit des zu untersuchenden Gegenstands 1 zu einem Schritt der Herstellung des zu untersuchenden Gegenstands 1.

3. Verfahren zur Herstellung eines Abscheidungsmaterials nach Anspruch 1 oder 2, wobei ein Schwankungskoeffizient 1 des Basisgewichts der Ansammlung aus Kohlenstoff-Schnittfasern oder ein Schwankungskoeffizient 2 des Gesamtbasisgewichts des Abscheidungsmaterials gemäß den Schritten 20% oder weniger beträgt.

4. Verfahren zur Herstellung eines Abscheidungsmaterials nach einem der Ansprüche 1 bis 3, wobei der Untersuchungsschritt umfasst:

Erfassen von Infrarotstahlen, die von dem zu untersuchenden Gegenstand 1 ausgesendet werden, und Verwenden eines Phasenanalyseverfahrens.

5. Verfahren zur Herstellung eines Abscheidungsmaterials nach Anspruch 4, darüber hinaus umfassend, den zu untersuchenden Gegenstand 1 mittels eines Faserlasers zu erwärmen, um die vom zu untersuchenden Gegenstand 1 ausgesendeten Infrarotstahlen zu erfassen.

6. Verfahren zur Herstellung eines Abscheidungsmaterials nach Anspruch 5, wobei der Laser eine Vorrichtung durchläuft, die in der Lage ist, einen Abstrahlbereich des Lasers einzustellen, und dann der zu untersuchende Gegenstand 1 erwärmt wird, um die Infrarotstahlen zu erfassen.

7. Verfahren zur Herstellung eines Abscheidungsmaterials nach einem der Ansprüche 1 bis 3, wobei im Untersuchungsschritt ein Tomographiebild verwendet wird, das erhalten wird, indem der zu untersuchende Gegenstand 1 mit einem Röntgen-CT aufgenommen wird, oder Daten des Tomographiebilds verwendet werden.

8. Verfahren zur Herstellung eines Abscheidungsmaterials nach Anspruch 7 unter Verwendung von Röntgenstrahlen mit einer Spitzenintensität der Röntgenstrahlen bei einer Wellenlänge von weniger als $1{,}0 \times 10^{-10}$ m.

9. Verfahren zur Herstellung eines Abscheidungsmaterials nach einem der Ansprüche 1 bis 3, wobei im Untersuchungsschritt ein fluoroskopisches Bild verwendet wird, das erhalten wird, indem der zu untersuchende Gegenstand 1 mithilfe einer Röntgenstrahl-Untersuchungsvorrichtung aufgenommen wird, die einen Röntgenstrahl-Flächensensor oder einen Röntgenstrahl-Liniensensor aufweist, oder aus dem fluoroskopischen Bild abgeleitete Daten verwendet werden.

10. Verfahren zur Herstellung eines Abscheidungsmaterials nach Anspruch 7 oder 9, wobei ein räumlicher Mittelwert von digitalen Werten im Tomographiebild oder im fluoroskopischen Bild des zu untersuchenden Gegenstands 1 bei 5 % oder mehr liegt und kleiner als 100 % eines Grenzwerts eines digitalen Werts im Tomographiebild oder fluoroskopischen Bild ist.

11. Verfahren zur Herstellung eines Abscheidungsmaterials nach Anspruch 9 oder 10 mittels Röntgenstrahlen mit einer Spitzenintensität der Röntgenstrahlen bei einer Wellenlänge von weniger als $0{,}5 \times 10^{-10}$ m.

12. Verfahren zur Herstellung eines Abscheidungsmaterials nach einem der Ansprüche 9 bis 11, darüber hinaus einen Schritt umfassend, numerische Daten um mehr als das 1,0-fache zu erhöhen, wobei die numerischen Daten auf einem relativen Belichtungsmaß der Röntgenstrahlen beruhen, die vom Röntgenstrahl-Flächensensor oder Röntgenstrahl-Liniensensor empfangen werden.

13. Verfahren zur Herstellung eines Abscheidungsmaterials nach einem der Ansprüche 1 bis 12, wobei ein Höchstwert einer Abweichung bezüglich eines Mittelwerts des Basisgewichts des im Untersuchungsschritt zu untersuchenden Gegenstands 1 bei 1500 g/m$^2$ oder darunter liegt.

14. Verfahren zur Herstellung eines Verbundstoffs, umfassend:
Erwärmen des Abscheidungsmaterials nach einem der Ansprüche 1 bis 13, um die Ansammlung aus Kohlenstoff-Schnittfasern mit zumindest einem Teil des thermoplastischen Harzes zu imprägnieren.

15. Verfahren zur Herstellung eines Verbundstoffs nach Anspruch 14, darüber hinaus umfassend:

Untersuchen des Vorhandenseins oder Nichtvorhandenseins von Fremdstoffen, die innerhalb des Verbundstoffs beigemischt sind, oder des Vorhandenseins oder Nichtvorhandenseins eines Leerraums innerhalb des Materials.

**Revendications**

1. Procédé de fabrication d'un matériau de dépôt contenant une résine thermoplastique et des fibres de carbone discontinues, dans lequel une longueur d'une face du matériau de dépôt est de 300 mm ou plus, le procédé de fabrication du matériau de dépôt présentant les étapes suivantes :

   Étape 101 : une étape d'examen consistant à examiner de manière non destructive un poids de base soit d'un agrégat de fibres de carbone discontinues, soit du matériau de dépôt - désigné ci-après comme objet à examiner 1,
   Étape 201 : une étape de détermination d'une inégalité de poids de l'objet à examiner 1 sur la base des résultats de l'examen de l'étape 101, et
   Étape 301 : une étape consistant à ajouter les fibres de carbone discontinues à une position de l'agrégat de fibres de carbone discontinues dans laquelle le poids de base est insuffisant afin de réduire l'inégalité de poids, ou une étape consistant à ajouter l'agrégat de fibres de carbone discontinues et/ou la résine thermoplastique à une position du matériau de dépôt dans laquelle le poids de base est insuffisant afin de réduire l'inégalité de poids sur la base de l'inégalité de poids de l'étape 201.

2. Procédé de fabrication d'un matériau de dépôt selon la revendication 1, comprenant en outre l'étape 202 suivante après l'étape 201 :
   Étape 202 : une étape de renvoi de l'inégalité de poids de l'objet à examiner 1 obtenue à l'étape 201 vers une étape de fabrication de l'objet à examiner 1.

3. Procédé de fabrication d'un matériau de dépôt selon la revendication 1 ou 2, dans lequel un coefficient de variation 1 du poids de base de l'agrégat des fibres de carbone discontinues ou un coefficient de variation 2 du poids de base total du matériau de dépôt est égal à 20% ou inférieur, selon les étapes.

4. Procédé de fabrication d'un matériau de dépôt selon l'une quelconque des revendications 1 à 3, dans lequel l'étape d'examen comprend :

   la détection de rayons infrarouges émis par l'objet à examiner 1 et
   l'utilisation d'une méthode d'analyse de phase.

5. Procédé de fabrication d'un matériau de dépôt selon la revendication 4, comprenant en outre le chauffage de l'objet à examiner 1 en utilisant un laser à fibre pour détecter les rayons infrarouges émis par l'objet à examiner 1.

6. Procédé de fabrication d'un matériau de dépôt selon la revendication 5, dans lequel le laser passe à travers un dispositif capable d'ajuster une plage d'irradiation du laser, et ensuite l'objet à examiner 1 est chauffé pour détecter les rayons infrarouges.

7. Procédé de fabrication d'un matériau de dépôt selon l'une quelconque des revendications 1 à 3, dans lequel l'étape d'examen utilise une image tomographique obtenue en capturant l'objet à examiner 1 par radiographie CT à rayons X ou des données de l'image tomographique.

8. Procédé de fabrication d'un matériau de dépôt selon la revendication 7, utilisant des rayons X ayant un pic d'intensité des rayons X à une longueur d'onde inférieure à $1,0 \times 10^{-10}$ m.

9. Procédé de fabrication d'un matériau de dépôt selon l'une quelconque des revendications 1 à 3, dans lequel l'étape d'examen utilise une image fluoroscopique obtenue en capturant l'objet à examiner 1 en utilisant un dispositif d'examen à rayons X comprenant un capteur de surface à rayons X ou un capteur de ligne à rayons X ou des données dérivées de l'image fluoroscopique.

10. Procédé de fabrication d'un matériau de dépôt selon la revendication 7 ou 9, dans lequel une moyenne spatiale de valeurs digitales dans l'image tomographique ou dans l'image fluoroscopique de l'objet à examiner 1 est de 5 % ou plus et inférieure à 100 % d'une valeur limite d'une valeur digitale dans l'image tomographique ou dans l'image fluoroscopique.

**11.** Procédé de fabrication d'un matériau de dépôt selon la revendication 9 ou 10, utilisant des rayons X ayant un pic d'intensité de rayons X à une longueur d'onde inférieure à $0,5 \times 10^{-10}$ m.

**12.** Procédé de fabrication d'un matériau de dépôt selon l'une quelconque des revendications 9 à 11, comprenant en outre une étape consistant à amplifier les données numériques de plus de 1,0 fois, les données numériques étant basées sur une quantité d'exposition relative des rayons X reçus par le capteur de zone de rayons X ou par le capteur de ligne de rayons X.

**13.** Procédé de fabrication d'un matériau de dépôt selon l'une quelconque des revendications 1 à 12, dans lequel une valeur maximale de déviation par rapport à une valeur moyenne du poids de base de l'objet à examiner 1 examiné dans l'étape d'examen est de 1500 g/m$^2$ ou moins.

**14.** Procédé de fabrication d'un matériau composite comprenant :
le chauffage du matériau de dépôt selon l'une quelconque des revendications 1 à 13 pour imprégner l'agrégat de fibres de carbone discontinues avec au moins une partie de la résine thermoplastique.

**15.** Procédé de fabrication d'un matériau composite selon la revendication 14 comprenant en outre :
l'examen de la présence ou de l'absence de matières étrangères mélangées à l'intérieur du matériau composite ou la présence ou l'absence d'un vide à l'intérieur du matériau.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5574261 B
- JP 6165207 B
- JP 58026328 B
- WO 2016152563 A
- JP 2013104056 A
- US 8946342 B

- US 8829103 B
- US 9193840 B
- US 9545760 B
- US 20150292145
- JP 5944114 B
- WO 2012105080 A

**Non-patent literature cited in the description**

- **TAKAHIRO HAYASHI ; TAKAYUKI KOBAYASHI ; ATSUSHI TAKAHASHI.** Soft X-ray Attenuation Coefficient of Composite Material. *The official Journal of Japan Society for Composite Materials,* 2016, vol. 42 (5), 169-177